## Europäisches Patentamt

## European Patent Office

## Office européen des brevets

(19)

(11) Veröffentlichungsnummer: **0 139 654**
**B1**

(12) **EUROPÄISCHE PATENTSCHRIFT**

(45) Veröffentlichungstag der Patentschrift:
02.09.87

(51) Int. Cl.⁴: **G 02 F 1/137**

(21) Anmeldenummer: **84900272.0**

(22) Anmeldetag: **24.12.83**

(86) Internationale Anmeldenummer:
**PCT/DE 83/00220**

(87) Internationale Veröffentlichungsnummer:
**WO 84/04403 (08.11.84 Gazette 84/26)**

(54) **ANORDNUNG ZUR REDUZIERUNG DER RESTTRANSMISSION BEI LCD-ANZEIGEN.**

(30) Priorität: **22.04.83 DE 3314632**

(43) Veröffentlichungstag der Anmeldung:
**08.05.85 Patentblatt 85/19**

(45) Bekanntmachung des Hinweises auf die Patenterteilung:
**02.09.87 Patentblatt 87/36**

(84) Benannte Vertragsstaaten:
**CH DE FR GB LI**

(56) Entgegenhaltungen:
**FR-A-2 250 458**
**GB-A-1 462 978**
**GB-A-2 028 527**
**GB-A-2 078 389**

**Patents Abstracts of Japan, volume 7, No. 5, pages P-169, 1160, 21 January 1983**

(73) Patentinhaber: **ROBERT BOSCH GMBH, Robert-Bosch- Platz 1, D-7016 Gerlingen- Schillerhöhe (DE)**

(72) Erfinder: **ZIEGLER, Wolfgang, Philipp- Reis-Strasse 52, D-8510 Fürth (DE)**

EP 0 139 654 B1

LIBER, STOCKHOLM 1987

## Beschreibung

Die Erfindung geht aus von einer Anordnung zur Reduzierung der Resttransmission von Flüssigkristallanzeigen in "Twist"-Form nach der Gattung des Hauptanspruchs. Die farbige Resttransmission bei Flüssigkristallanzeigen im Negativkontrast ist bereits allgemein bekannt. Zur Reduzierung dieser Resttransmissionen wurde bei Flüssigkristallanzeigen bereits vorgeschlagen, der Flüssigkristallsubstanz einen bestimmten Anteil schwarzer Farbstoffe beizumischen. Dies hat jedoch den Nachteil, daß mit der Beimischung auch die Helltransmission der Flüssigkristallanzeige vermindert wird. Insbesondere bei den LCD-Anzeigen, bei denen die Resttransmission groß ist, können wegen der erforderlichen Farbbeimischungen derart schlechte Helltransmissionen auftreten, daß das bekannte Verfahren nicht mehr verwendbar ist. Auch die Verwendung von Farbschichten führen zu Lichtverlusten und zur Farbstichigkeit bei den Helltransmissionen.

Mit der vorliegenden Lösung wird angestrebt, störende farbige Resttransmissionen, welche durch eine elliptische Polarisation beim Durchgang des linearpolarisierten Lichtes durch eine inaktive TN-Flüssigkristallschicht in Form von farbigen Interferenzen erzeugt wird, durch geeignete Maßnahmen zu eliminieren, ohne dabei die Helltransmission zu beeinträchtigen.

Aus der FR-A-2 250 458 ist eine Flüssigkristallanzeige mit einer Flüssigkristallsubstanz in "Twist"-Anordnung, mit zwei Elektroden und zwei Substraten, mit einem Rück- und einem dazu parallelen Frontpolarisator, einer Lichtquelle und mit einem doppelbrechenden Plättchen zwischen Frontpolarisator und vorderem Substrat bekannt. Diese Anordnung dient jedoch der Farbdarstellung, gegebenenfalls vor einem schwarzen Hintergrund; von der Reduzierung farbiger Resttransmissionen ist hier nichts gesagt.

Die erfindungsgemäße Anordnung mit den kennzeichnenden Merkmalen des Hauptspruchs hat den Vorteil, daß die störenden Interferenzen in den nicht angesteuerten, dunklen Bereichen der Anzeige durch die Verzögerungsfolie eliminiert werden, so daß die Resttransmission im Negativkontrast wesentlich reduziert wird. Ein weiterer Vorteil besteht darin, daß die Helltransmission in den angesteuerten Bereichen der Anzeige durch diese Maßnahme nicht beeinträchtigt wird. Bei geeigneter Anordnung und Dimensionierung der Verzögerungsfolie ist es ferner in vorteilhafter Weise möglich, in den Dunkelbereichen der Anzeige einen beliebigen Farbton einzustellen, in der die Anzeige dem Betrachter erscheinen soll. Außerdem kann damit gleichzeitig eine erhebliche Kontrastverbesserung erzielt werden.

Durch die in den Unteransprüchen aufgeführten Maßnahmen sind vorteilhafte Weiterbildungen und Verbesserungen der im Hauptanspruch angegebenen Merkmale möglich. Für die Eliminierung der störenden Interferenzen in den Dunkelbereichen der Anzeige hat es sich als besonders vorteilhaft herausgestellt, wenn die Hauptebene der Verzögerungsfolie um 5 bis 10° gegenüber der Polarisationshauptebene des an der vorderen Glasplatte austretenden Lichtes versetzt ist. Die Hauptebene der Verzögerungsfolie ist dabei die Ebene bzw. Richtung oder Achse in der polarisiertes Licht die geringste Verzögerung erfährt.

Ein Ausführungsbeispiel der Erfindungen ist der Zeichnung dargestellt und in der nachfolgenden Beschreibung näher erläutert. Die Figur zeigt eine LCD-Zelle in sogenannter Explosionsdarstellung mit einem elektrisch angesteuerten und einem nicht angesteuerten Bereich.

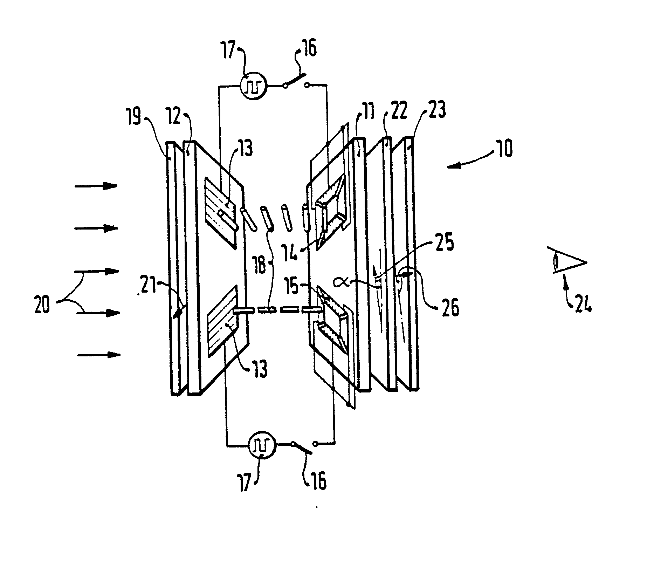

In Figur 1 ist eine Flüssigkristallanzeige für Kraftfahrzeuge in Form einer LCD-Zelle 10 in ihren Einzelteilen explosionsartig nebeneinanderliegend dargestellt. Die Zelle 10 besteht im wesentlichen aus zwei Glasplatten 11 und 12 als Substrate, auf denen an den inneren Oberflächen Metallelektroden 13, 14 und 15 aufgedampft sind. Die Metallelektroden 13, 14 und 15 sind jeweils über elektronische Schalter 16 an die Spannung eines Impulsgenerators 17 anzuschließen. Zwischen den beiden Glasplatten 11 und 12, die im montierten Zustand mit geringem Abstand übereinanderliegen, befindet sich eine Flüssigkristallsubstanz. Die symbolisch dargestellten Moleküle 18 der Flüssigkristallsubstanz sind durch eine Oberflächenbehandlung der Glasplatten 11 und 12 so orientiert, daß sie bei nichtangelegter Spannung eine schraubenförmige Verdrillung im Inneren der Zelle 10 um 90° haben. Dies ist im oberen Bereich der Zelle 10 dargestellt. An der Rückseite der hinteren Glasplatte 12 befindet sich ein linearpolarisierender Rückpolarisator 19, der das durch Pfeile 20 angedeutete, von hinten auf die Zelle 10 fallende Licht linear polarisiert. Die Polarisationsebene des Rückpolarisators 19 ist durch den Pfeil 21 dargestellt. Durch die Vorspannung der Moleküle 18 der sogenannten TN(twisted nematic)-Flüssigkristallsubstanz wird in den nicht angesteuerten Bereichen der Zelle 10 die Ebene des polarisierten Lichtes 20 innerhalb der Flüssigkristallsubstanz um 90° gedreht. Das auf diese Weise gedrehte Licht tritt an der vorderen Glasplatte 11 wieder aus der Flüssigkristallsubstanz aus. Auf der Vorderseite dieser Glasplatte 11 ist eine Verzögerungsfolie 22 angeordnet, auf der schließlich ein Frontpolarisator 23 sitzt. Ohne die zwischengefügte Verzögerungsfolie 22 wird bei einer sogenannten Negativkontrast-Anzeige die Polarisationsebene des Frontpolarisators 23 so ausgerichtet, daß sie mit der Ebene 21 des Rückpolarisators 19 übereinstimmt. Im Idealfall würde dabei in den nicht angesteuerten Bereichen der Zelle 10 das polarisierte, in der Flüssigkristallsubstanz um 90 gedrehte Licht durch den Frontpolarisator 23 vollständig absorbiert. Dem durch ein Auge 24 symbolisch dargestellten Betrachter würden die nicht angesteuerten Bereiche der Zelle 10 schwarz erscheinen.

Werden dagegen - wie im unteren Bereich der Zelle 10 dargestellt - die Elektroden 13 und 15 über den Schalter 16 an Spannung gelegt, so wird die Molekülanordnung durch das elektrische Feld dieser Spannung in ihrer Schraubenstruktur zerstört und die Lichtdrehung wird aufgehoben. Das Licht 20 tritt nunmehr durch den Rückpolarisator 19 linearpolarisiert und ohne Drehung durch die Flüssigkristallsubstanz hindurch und kann durch den entsprechend ausgerichteten Frontpolarisator 23 hindurch nach vorn austreten, so daß die angesteuerten Bereiche der Zelle 10 auf einem schwarzen Hintergrund hell erscheinen.

Die TN-Flüssigkristallsubstanz hat jedoch noch die weitere Eigenschaft, daß sie das linearpolarisierte Licht in den nicht angesteuerten Bereichen nicht nur um 90° dreht sondern außerdem auch noch elliptisch polarisiert. Diese elliptische Polarisation verursacht farbige Interferenzen, die sich bei achsparalleler Anordnung der beiden Polarisatoren 19 und 23 für den Betrachter störend als farbige Resttransmission bemerkbar macht. Mit der Verzögerungsfolie 22 wird nun erreicht, daß das an der vorderen Glasplatte 11 aus der Flüssigkristallsubstanz austretende elliptisch polarisierte Licht wieder in linearpolarisiertes Licht umgewandelt wird. Zu diesem Zweck wird die Hauptebene 25 der Verzögerungsfolie 22 gegenüber der Polarisationshauptebene des aus der Flüssigkristallsubstanz in den nicht angesteuerten Bereichen austretenden elliptisch polarisierten Lichtes um einen Winkel α bis zu 20 gedreht. Der folgende Polarisator 23 muß dabei mit seiner Polarisationsebene 26 so gedreht sein, daß sie senkrecht zur Polarisationsebene des die Verzögerungsfolie 22 verlassenden Lichtes, in der Regel 80° bis 90° dazu steht.

Um die störenden farbigen Resttransmissionen praktisch vollständig zu eliminieren, wird die Verzögerungsfolie 22 mit ihrer Hauptebene 25 um 5° bis 10° gegenüber der Hauptebene des elliptisch polarisierten Lichtes in Richtung der Verdrillung des Lichtes gedreht. Besonders geeignet ist dabei als Verzögerungsfolie 22 eine λ/4-Folie für eine Wellenlänge des Lichtes von λ = 550 nm. Durch diese Maßnahme wird die elliptische Polarisation des Lichtes in der Verzögerungsfolie 22 in eine lineare Polarisation zurückgeführt und dadurch die störende Farberscheinung eliminiert. Durch eine zusätzliche Drehung der Polarisationshauptebene der Verzögerungsfolie 22 ist es möglich, in den nicht angesteuerten Bereichen der Zelle 10 eine zusätzliche, gewünschte Einfärbung zu erreichen, um damit gegebenenfalls die Kontrastwirkung der Anzeige noch zu verbessern. Außerdem ist es durch die zusätzliche Anordnung eines Transflektors hinter dem Rückpolarisator 19 noch möglich, auch das von vorn auf die Zelle 10 fallende Licht zur Aufhellung der Anzeige in bekannter Weise auszunutzen.

**Patentansprüche**

1. Anordnung zur Reduzierung der Resttransmission von Flüssigkristallanzeigen in "Twist"-Form, mit einer Flüssigkristallsubstanz zwischen zwei mit Elektroden beschichteten, lichtdurchlässigen Substraten, einem Rückpolarisator und einem Frontpolarisator, einem doppelbrechenden Plättchen zwischen Frontpolarisator und vorderem Substrat sowie einer Lichtquelle hinter dem Rückpolarisator, dadurch gekennzeichnet, daß das doppelbrechende Plättchen zwischen dem Frontpolarisator (23) und dem vorderen Substrat (11) der Flüssigkristallanzeige (10) eine λ/4-Verzögerungsfolie (22) ist, deren Hauptebene (25) gegenüber der Polarisationshauptebene des aus der Flüssigkristallsubstanz in den nicht angesteuerten Bereichen austretenden, polarisierten Lichtes um einen Winkel $0° < \alpha \leqslant 20°$ in Richtung der Verdrillung des polarisierten Lichtes in der Flüssigkristallsubstanz gedreht ist und daß die Polarisationsebene (26) des Frontpolarisators (23) gegenüber der Hauptebene (25) der Verzögerungsfolie (22) um weitere 80° bis 90° gedreht ist.

2. Anordnung nach Anspruch 1, dadurch gekennzeichnet, daß die Hauptebene (25) der Verzögerungsfolie (22) um 5° bis 10° gegenüber der Polarisationshauptebene des am vorderen Substrat (22) austretenden Lichtes versetzt ist.

**Claims**

1. Arrangement for reducing the residual transmission of liquid crystal displays in "twist" form, having a liquid crystal substance between two light-transmitting substrates coated with electrodes, a rear polarizer and a front polarizer, a birefringent small plate between the front polarizer and the front substrate as well as a light source behind the rear polarizer, characterized in that the birefringent small plate between the front polarizer (23) and the front substrate (11) of the liquid crystal display (10) is a λ/4 retarder foil (22), the principal plane (25) of which is rotated, in relation to the principal plane of polarization of the polarized light emerging from the liquid crystal substance in the non-driven regions, by an angle $0° < \alpha \leqslant 20°$ in the direction of twist of the polarized light in the liquid crystal substance, and in that the plane of polarization (26) of the front polarizer (23) is rotated in relation to the principal plane (25) of the retarder foil (22) by further angle of 80° to 90°.

2. Arrangement according to Claim 1, characterized in that the principal plane (25) of the retarder foil (22) is offset by 5° to 10° in relation to the principal plane of polarization of the light emerging at the front substrate (22).

## Revendications

1. Dispositif pour réduire la transmission résiduelle d'affichages à cristaux liquides de formes "twist" avec une substance de cristaux liquides entre deux substrats transparents à la lumière revêtus d'électrodes, avec un polarisateur arrière et avec un polarisateur frontal, avec une plaquette à double réfraction entre le polarisateur frontal et le substrat antérieur, ainsi qu'avec une source de lumière derrière le polarisateur arrière, dispositif caractérisé en ce que la plaquette à double réfraction entre le polarisateur frontal (23) et le substrat antérieur (11) de l'affichage à cristaux liquides (10) est un film de retard (22) $\lambda$ /4, dont le plan principal (25) est décalé d'un angle $0° < \alpha \leqslant 20°$ dans le sens de la portion de la lumière polarisée dans la substance de cristaux liquides par rapport au plan principal de polarisation de la lumière polarisée sortant de la substance de cristaux liquides dans les zones non commandées, tandis que le plan de polarisation (26) du polarisateur frontal (23) est décalé en rotation de 80 à 90° par rapport au plan principal (25) du film de retard (22).

2. Dispositif selon la revendication 1, caractérisé en ce que le plan principal (25) du film de retard (22) est décalé de 5 à 10° par rapport au plan principal de polarisation de la lumière sortant sur le substrat antérieur (22).